# EUROPEAN PATENT APPLICATION

(11) **EP 4 671 550 A1**
(43) Date of publication of application: **31.12.2025**
(21) Application number: 25182880.2
(22) Date of filing: 16.06.2025
(51) Int. Cl.: F16B 25/00, F16B 35/00

(54) **ELONGATED THREADED MEMBER AND METHOD AND FASTENING ARRAGEMENT UTILIZING THE ELONGATED THREADED MEMBER**

(30) Priority: 26.06.2024 FI 20245816
(71) Applicant: Peikko Group Oy, 15170 Lahti (FI)
(72) Inventor: Berzins, Andris, 1005 Riga (LV)
(74) Representative: Boco IP Oy Ab

(57) **Abstract**

Presented is an elongated threaded member (1) having a central axis A-A, a shank (2), a first free end (3), a second free end (4), and an external wood thread (5) protruding from the shank (2) and extending from the second free end (4) of the elongated threaded member (1) helically along at least a part of the shank (2). The elongated threaded member (1) having at least one longitudinal groove (6) extending in a longitudinal direction of the elongated threaded member (1), wherein said at least one longitudinal groove (6) having a depth that radially extends fully through the external wood thread (5) and into the shank (2) and having a length extending for more than 50 % of the length of the external wood thread (5). Presented is also a method and a fastening arrangement utilizing the elongated threaded member (1).

## Description

### Field of the invention

The invention relates to an elongated threaded member as defined in the preamble of independent claim 1.

### Objective of the invention

The object of the invention is to provide a reliable elongated threaded member that can for example be used in methods and in fastening arrangements for fastening a construction component of metal to a construction part of wood or that can for example be used as a reinforcing member for reinforcing construction parts of wood.

### Short description of the invention

The elongated threaded member is characterized by the definitions of independent claim 1.

Preferred embodiments of the elongated threaded member are defined in the dependent claims 2 to 12.

The method for fastening a construction component of metal to a construction part of wood of the invention is characterized by the definitions of claim 13.

Preferred embodiments of the method are defined in the dependent claims 14 to 16.

The fastening arrangement for fastening a construction component of metal to a construction part of wood of the invention is correspondingly characterized by the definitions of claim 17.

Preferred embodiments of the fastening arrangement are defined in the dependent claims 18 to 20.

### List of figures

In the following the invention will described in more detail by referring to the figures, of which
Figure 1 shows a first embodiment of the elongated threaded member,
Figure 2 shows a second embodiment of the elongated threaded member,
Figure 3 shows a third embodiment of the elongated threaded member,
Figure 4 shows a fourth embodiment of the elongated threaded member,
Figure 5 shows a fifth embodiment of the elongated threaded member,
Figure 6 shows a sixth embodiment of the elongated threaded member,
Figure 7 shows a possible cross-section form of the elongated threaded member,
Figure 8 shows another possible cross-section form of the elongated threaded member,
Figure 9 shows yet another possible cross-section form of the elongated threaded member,
Figure 10 shows a step of the method, and
Figure 11 shows an embodiment of the fastening arrangement.

### Detailed description of the invention

First the elongated threaded member 1 and some embodiments and variants of the elongated threaded member 1 will be described in greater detail.

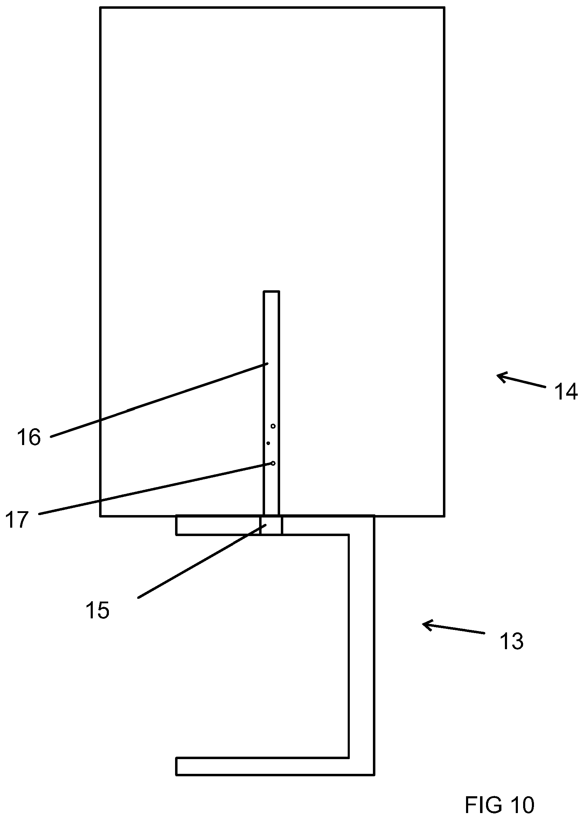

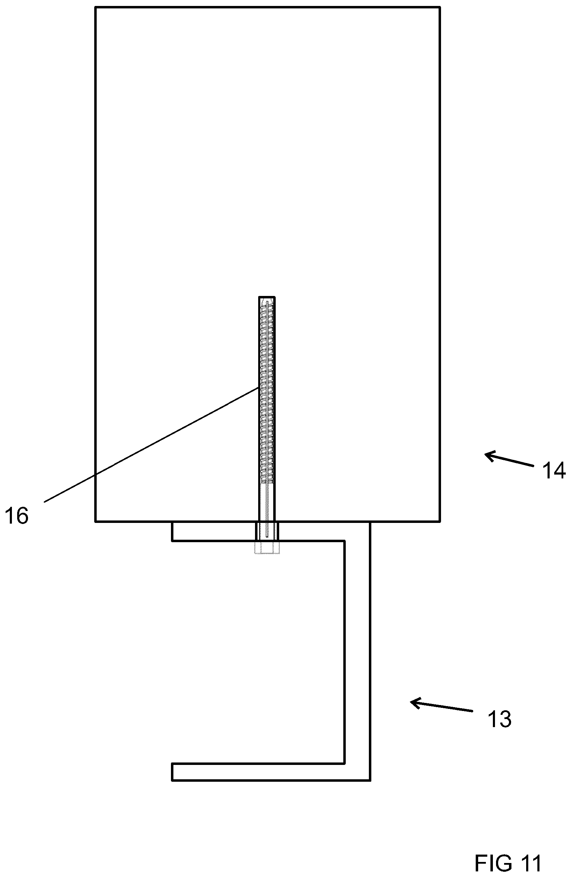

The elongated threaded member 1 can for example be used for a fastening construction component 13 of metal to a construction part 14 of wood as exemplified in figures 10 and 11. The elongated threaded member 1 can for example be used for reinforcing construction parts of wood by being screwed into holes such as into blind holes drilled in construction part of wood. If the elongated threaded member 1 is used for reinforcing construction parts of wood, one purpose of the elongated threaded member 1 can for example be to ensure that parts of a glued-laminated timber structure are kept together and that said part are nor split apart from each other.

The elongated threaded member 1 have central axis A-A, a shank 2, a first free end 3, a second free end 4, and an external wood thread 5 protruding from the shank 2 and extending from the second free end 4 of the elongated threaded member 1 helically along at least a part of the shank 2.

The elongated threaded member 1 is preferably, but not necessarily, made of metal such as of steel.

The length of the elongated threaded member 1 is preferably, but not necessarily, between 160 and 1000 mm.

The diameter of the elongated threaded member 1 is preferably, but not necessarily, between 12 and 20 mm.

The elongated threaded member 1 is preferably, but not necessarily, solid, i.e. not hollow.

The external wood thread 5 is preferably, but not necessarily, a thread according to standard DIN 7998 (Thread and thread ends for wood screws).

The elongated threaded member 1 has at least one longitudinal groove 6 extending in a longitudinal direction of the elongated threaded member 1.

Said at least one longitudinal groove 6 have a depth that radially extends fully through the external wood thread 5 and into the shank 2 and having a length extending of more than 50 %, preferably more than 75 %, of the length of the external wood thread 5.

A purpose of said at least one longitudinal groove 6 is to distribute glue that can be used when the elongated threaded member 1 is screwed into a hole, preferable into a blind hole that is drilled into wood, evenly around the part of the elongated threaded member 1 that is screwed into the hole, preferable into the blind hole. This promotes for example anchoring of the elongated threaded member 1 in the hole, preferable in the blind hole.

Said at least one longitudinal groove 6 extend preferably, but not necessarily, in parallel with the central axis A-A of the elongated threaded member 1.

The depth of said at least one longitudinal groove 6 can be between 2 and 6 mm, such as between 3 and 5 mm, for example about 4 mm. The depth of said at least one longitudinal groove 6 can here mean the depth of said at least one longitudinal groove 6 as measured from the minor diameter of the external wood thread 5.

The width of said at least one longitudinal groove 6 can be between 1 and 5 mm, such as between 2 and 4 for example about 3 mm. The width of said at least one longitudinal groove 6 can here mean the width of said at least one longitudinal groove 6 at the minor diameter of the external wood thread 5.

Said at least one longitudinal groove 6 extends preferably, but not necessarily, 1 to 2 mm into the shank 2 of the elongated threaded member 1.

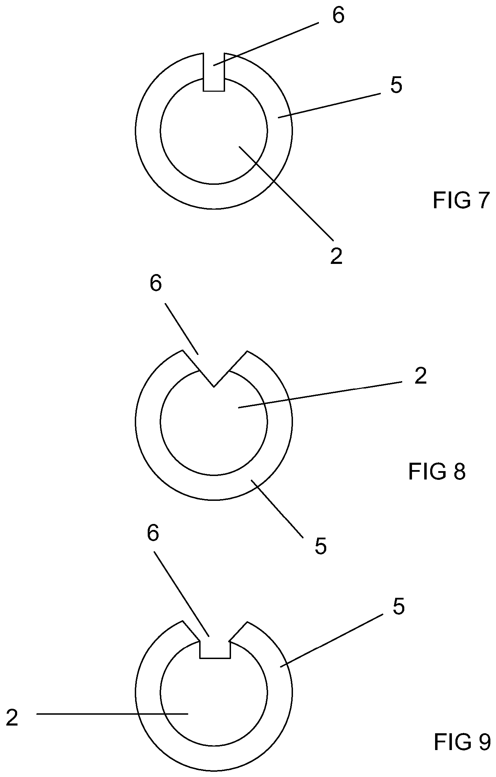

Said at least one longitudinal groove 6 can a variety of cross section forms. In figures 7 to 9 some possible cross section forms are illustrated.

In the elongated threaded member 1 illustrated in cross-section in figure 7, the longitudinal groove 6 has a bottom (not marked with a reference numeral) and sides (not marked with a reference numeral) extending transversely in relation to the bottom.

In the elongated threaded member 1 illustrated in cross-section in figure 8, the longitudinal groove 6 has a V-shaped form with sides (not marked with a reference numeral). The angle between sides can be between 60 and 120 degrees. One advantage with a such cross-section form is that as the corners between the longitudinal groove 6 and the external wood thread 5 at the major diameter of the external wood thread 5 be less sharp than in figure 7, less damage will result on a surrounding inner surface of a hole into which the elongated threaded member 1 is screwed.

In the elongated threaded member 1 illustrated in cross-section in figure 9, the longitudinal groove 6 has a bottom (not marked with a reference numeral) and a lower section (not marked with a reference numeral) laterally limited by sides (not marked with a reference numeral) extending transversely in relation to the bottom and an upper section (not marked with a reference numeral) laterally limited by sides (not marked with a reference numeral) extending in an angle with respect to the bottom. The angle between sides in the upper section can be between 60 and 120 degrees. One advantage with a such cross-section form is that as the corners between the longitudinal groove 6 and the external wood thread 5 at the major diameter of the external wood thread 5 be less sharp than in figure 7, less damage will result on a surrounding inner surface of a hole into which the elongated threaded member 1 is screwed. Another advantage with such cross-section form compared to that illustrated in figure 8 is more space for glue because of the form of the lower section.

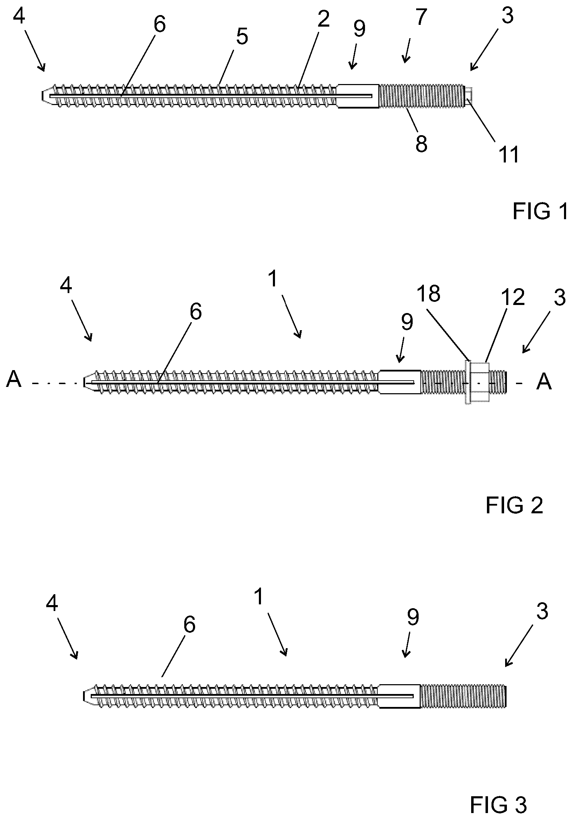

The elongated threaded member 1 can, as illustrated in figures 1 to 3, have an end section 7 with machine thread 8 extending helically along the shank 2 from the first free end 3. In such cases said at least one longitudinal groove 6 extend preferably, but not necessarily, to the machine thread 8 or to the vicinity of the machine thread 8 in the elongated threaded member 1 as illustrated in figures 1 to 3. If the elongated threaded member 1 has an end section 7 with machine thread 8 extending helically along the shank 2 from the first free end 3, the elongated threaded member 1 cam, as illustrated in figures 1 to 3, have an unthreaded section 9 between the machine thread 8 and the external wood thread 5.

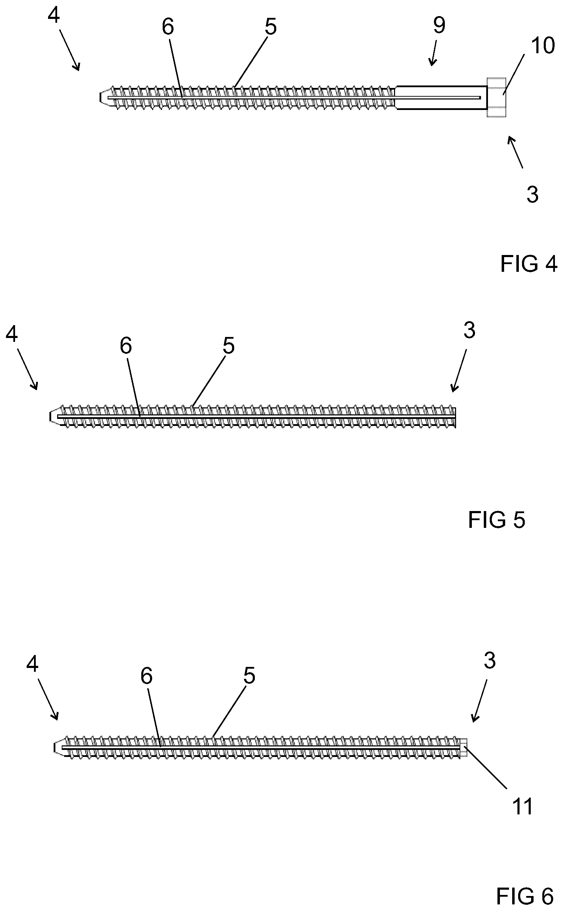

The elongated threaded member 1 can, as illustrated in figure 4, have a hexagon head 10 at the first free end 3. In such case, said at least one longitudinal groove 6 can, as illustrated in figure 4, extend to the hexagon head 10 or to the vicinity of the hexagon head 10 in the elongated threaded member. If the elongated threaded member 1 have a hexagon head 10 at the first free end 3, the elongated threaded member 1 has preferably, but not necessarily, as illustrated in figure 4, an unthreaded section 9 between the hexagon head 10 and the external wood thread 5.

The external wood thread 5 of the elongated threaded member 1 can, as illustrated in figure 5, extend to the first free end 3, or as illustrated in figure 6, extend to the vicinity of the first free end 3. In such case, the elongated threaded member 1 can have a projecting hexagon end 11 at the first free end 3 as illustrated in figure 6. It is also possible that the elongated threaded member 1 in such case has an internal recess such as an internal hexagonal recess (not illustrated), a Torx recess (not illustrated) or Phillips recess (not illustrated) at the first free end 3.

The number of longitudinal grooves 6 in the elongated threaded member 1 can for example be 1, 2, 3 or 4. The longitudinal grooves 6 in the elongated threaded member 1 are preferably, but not necessarily, symmetrically provided about the central axis A-A of the elongated threaded member 1.

Said at least one longitudinal groove 6 in the elongated threaded member 1 extend preferably, but not necessarily, over the full length of the external wood thread 5.

Next the method for fastening a construction component 13 of metal to a construction part 14 of wood and some embodiments and variants of the method will be described in greater detail.

The construction part 14 of wood can for example be a timber column and the construction component 13 of metal can for example be a timber column shoe that is fastened to a bottom surface of the timber column and by means of which the timber column is fastened to a foundation.

The method comprises a first providing step for providing the construction component 13 of metal with a hole 15.

The method comprises a drilling step for drilling a blind hole 16 in the construction part 14 of wood.

The depth of the blind hole 16 is preferably, but not necessarily, between 160 and 1000 mm.

The diameter of the blind hole 16 is preferably, but not necessarily, between 13 and 20 mm.

The method comprises a second providing step for providing glue 17 in the blind hole 16 in the construction part 14 of wood. The glue 17 is preferably, but not necessarily provided in the blind hole 16 closer to a bottom (not marked with a reference numeral) of the blind hole 17 than to an opening (not marked with a reference numeral) of the blind hole 17. The glue 17 is more preferably, but not necessarily provided in the blind hole 16 at a bottom (not marked with a reference numeral) of the blind hole 17.

The glue 17 is preferably, but not necessarily, epoxy or polyurethane glue.

The method comprises an aligning step for aligning the hole 15 in the construction component 13 of metal and the blind hole 16 in the construction part 14 of wood.

The method comprises a third providing step for providing an elongated threaded member 1, as presented earlier, having a central axis A-A, a shank 2, a first free end 3, a second free end 4, and an external wood thread 5 protruding from the shank 2 and extending from the second free end 4 of the elongated threaded member 1 helically along at least a part of the shank 2.

The elongated threaded member 1 is preferably, but not necessarily, made of metal such as of steel.

The diameter of the elongated threaded member 1 is preferably, but not necessarily, between 12 and 20 mm.

The diameter of the elongated threaded member 1, i.e. the major diameter of the external wood thread 5, is preferably, but not necessarily, 1 to 4 mm larger than the diameter of the blind hole 16.

The external wood thread 5 is preferably, but not necessarily, a thread according to standard DIN 7998 (Thread and thread ends for wood screws).

The method comprises an arranging step for arranging the elongated threaded member 1 to pass through the hole 15 in the construction component 13 of metal and into the blind hole 16 in the construction part 14 of wood so the external wood thread 5 protruding from the shank 2 is at least partly in the blind hole 16 in the construction part 14 of wood, and so that the first free end 3 of the elongated threaded member 1 is outside the blind hole 16 in the construction part 14 of wood and outside the hole 15 in the construction component 13 of metal.

The length of a section of the elongated threaded member 1 that is in the blind hole 16 is preferably, but not necessarily, 160 to 1000 mm.

The elongated threaded member 1 that is provided in the third providing step has at least one longitudinal groove 6 extending in a longitudinal direction of the elongated threaded member 1. Said at least one longitudinal groove 6 has a depth that radially extends fully through the external wood thread 5 and into the shank 2 and has a length extending for more than 50 %, preferably more than 75%, of the length of the external wood thread 5. Said at least one longitudinal groove 6 extend preferably, but not necessarily, in parallel with the central axis A-A of the elongated threaded member 1.

The depth of said at least one longitudinal groove 6 can be between 2 and 6 mm, such as between 3 and 5 mm, for example about 4 mm. The depth of said at least one longitudinal groove 6 can here mean the depth of said at least one longitudinal groove 6 as measured from the minor diameter of the external wood thread 5.

The width of said at least one longitudinal groove 6 can be between 1 and 3 mm, for example about 2 mm. The width of said at least one longitudinal groove 6 can here mean the width of said at least one longitudinal groove 6 at the minor diameter of the external wood thread 5. Said at least one longitudinal groove 6 extends preferably, but not necessarily, 1 to 2 mm into the shank 2 of the elongated threaded member 1.

Said at least one longitudinal groove 6 can a variety of cross section forms. **In** figures 7 to 9 some possible cross section forms are illustrated.

**In** the elongated threaded member 1 illustrated in cross-section in figure 7, the longitudinal groove 6 has a bottom (not marked with a reference numeral) and sides (not marked with a reference numeral) extending transversely in relation to the bottom.

In the elongated threaded member 1 illustrated in cross-section in figure 8, the longitudinal groove 6 has a V-shaped form with sides (not marked with a reference numeral). The angle between sides can be between 60 and 120 degrees. One advantage with a such cross-section form is that as the corners between the longitudinal groove 6 and the external wood thread 5 at the major diameter of the external wood thread 5 be less sharp than in figure 7, less damage will result on a surrounding inner surface of a hole into which the elongated threaded member 1 is screwed.

In the elongated threaded member 1 illustrated in cross-section in figure 9, the longitudinal groove 6 has a bottom (not marked with a reference numeral) and a lower section (not marked with a reference numeral) laterally limited by sides (not marked with a reference numeral) extending transversely in relation to the bottom and an upper section (not marked with a reference numeral) laterally limited by sides (not marked with a reference numeral) extending in an angle with respect to the bottom. The angle between sides in the upper section can be between 60 and 120 degrees. One advantage with a such cross-section form is that as the corners between the longitudinal groove 6 and the external wood thread 5 at the major diameter of the external wood thread 5 be less sharp than in figure 7, less damage will result on a surrounding inner surface of a hole into which the elongated threaded member 1 is screwed. Another advantage with such cross-section form compared to that illustrated in figure 8 is more space for glue because of the form of the lower section.

The elongated threaded member 1 that is provided in the third providing step can, as illustrated in figures 1 to 3, have an end section 7 with machine thread 8 extending helically along the shank 2 from the first free end 3. Said at least one longitudinal groove 6 extends preferably, but not necessarily, as illustrated in figures 1 to 3, to the machine thread 8 or to the vicinity of the machine thread 8 in the elongated threaded member 1 that is provided in the third providing step. The elongated threaded member 1 that is provided in the third providing step has preferably, but not necessarily, as illustrated in figures 1 to 3, an unthreaded section 9 between the machine thread 8 and the external wood thread 5. In such case, the elongated threaded member 1 is preferably, but not necessarily, arranged in the arranging step so that the unthreaded section 9 of the elongated threaded member 1 is in the hole 15 in the construction component 13 of metal. If the elongated threaded member 1 that is provided in the third providing step has an end section 7 with machine thread 8 extending helically along the shank 2 from the first free end 3, the method can include a fourth providing step for providing a nut 12 on the elongated threaded member 1 so that the nut 12 presses the construction component 13 of metal against the construction part 14 of wood. In such case, the method can include providing a washer 18 between the nut 12 and the construction component 13 of metal in the fourth providing step so that the nut 12 presses the construction component 13 of metal against the construction part 14 of wood via the washer 18.

The elongated threaded member 1 that is provided in the third providing step can, as illustrated in figure 4, have a hexagon head 10 at the first free end 3, wherein the hexagon head 10 of the elongated threaded member 1 is in the arranging step arranged to press the construction component 13 of metal against the construction part 14 of wood. In such case, said at least one longitudinal groove 6 extend preferably, but not necessarily, to the hexagon head 10 or to the vicinity of the hexagon head 10 in the elongated threaded member 1 that is provided in the third providing step as illustrated in figure 4. In such case the elongated threaded member 1 that is provided in the third providing step can, as illustrated in figure 4, have an unthreaded section 9 between the hexagon head 10 and the external wood thread 5, wherein the elongated threaded member 1 is arranged in the arranging step so that the unthreaded section 9 of the elongated threaded member 1 is in the hole 15 in the construction component 13 of metal. If the elongated threaded member 1 that is provided in the third providing step has a hexagon head 10 at the first free end 3, the method can include providing a washer 18 between hexagon head 10 of the elongated threaded member 1 and the construction component 13 of metal so that the hexagon head 10 of the elongated threaded member 1 presses the construction component 13 of metal against the construction part 14 of wood through the washer 18.

The external wood thread 5 of the elongated threaded member 1 that is provided in the third providing step can also, as illustrated in figure 5, extend to the first free end 3, or as illustrated in figure 6, to the vicinity of the first free end 3. In such case, the elongated threaded member 1 that is provided in the third providing step can, as illustrated in figure 6, have a projecting hexagon end 11 at the first free end 3. In such case, it is also possible that the elongated threaded member 1 that is provided in the third providing step has for example an internal recess such as an internal hexagonal recess (not illustrated), a Torx recess (not illustrated) or Phillips recess (not illustrated) at the first free end 3.

The number of longitudinal grooves 6 in the elongated threaded member 1 that is provided in the third providing step can be 1, 2, 3 or 4. The longitudinal grooves 6 in the elongated threaded member 1 that is provided in the third providing step are preferably, but not necessarily, symmetrically provided.

Said at least one longitudinal groove 6 in the elongated threaded member 1 that is provided in the third providing step extend preferably, but not necessarily, as illustrated in figures 1 to 6, over the full length of the external wood thread 5.

The elongated threaded member 1 is preferably, but not necessarily, arranged in the arranging step so that said at least one longitudinal groove 6 extend out of the blind hole 16 in the construction part 14 of wood so as to provide a passage for excess glue 17 out of the blind hole 16.

Next the fastening arrangement for fastening a construction component 13 of metal to a construction part 14 of wood and some embodiments and variants of the fastening arrangement will be described in greater detail.

The construction part 14 of wood can for example be a timber column and the construction component 13 of metal can for example be a timber column shoe that is fastened to a bottom surface of the timber column and by means of which the timber column is fastened to a foundation.

In the fastening arrangement, the construction component 13 of metal is provided with a hole 15.

In the fastening arrangement, a blind hole 16 is drilled in the construction part 14 of wood and glue 17 is provided in the blind hole 16.

The depth of the blind hole 16 is preferably, but not necessarily, between 160 and 1000 mm.

The diameter of the blind hole 16 is preferably, but not necessarily, between 12 and 20 mm.

The glue 17 is preferably, but not necessarily, epoxy or polyurethane glue.

In the fastening arrangement, the hole 15 in the construction component 13 of metal and the blind hole 16 in the construction part 14 of wood are aligned.

In the fastening arrangement, an elongated threaded member 1, as presented earlier, having a central axis A-A, a shank 2, a first free end 3, a second free end 4, and an external wood thread 5 protruding from the shank 2 and extending from the second free end 4 of the elongated threaded member 1 helically along at least a part of the shank 2, is arranged to pass through the hole 15 in the construction component 13 of metal and into the blind hole 16 in the construction part 14 of wood so the external wood thread 5 protruding from the shank 2 is at least partly in the blind hole 16 in the construction part 14 of wood, and so that the first free end 3 of the elongated threaded member 1 is outside the blind hole 16 in the construction part 14 of wood and outside the hole 15 in the construction component 13 of metal.

The elongated threaded member 1 is preferably, but not necessarily, made of metal such as of steel.

The diameter of the elongated threaded member 1 is preferably, but not necessarily, between 12 and 20 mm.

The diameter of the elongated threaded member 1 i.e. the major diameter of the external wood thread 5, is preferably, but not necessarily, 1 to 4 mm larger than the diameter of the blind hole 16.

The external wood thread 5 is preferably, but not necessarily, a thread according to standard DIN 7998 (Thread and thread ends for wood screws).

The length of a section of the elongated threaded member 1 that is in the blind hole 16 is preferably, but not necessarily, 160 to 1000 mm.

The elongated threaded member 1 has at least one longitudinal groove 6 extending in a longitudinal direction of the elongated threaded member 1, wherein said at least one longitudinal groove 6 having a depth that radially extends fully through the external wood thread 5 and into the shank 2 and having a length extending for more than 50 %, preferably more than 75%, of the length of the external wood thread 5. Said at least one longitudinal groove 6 extend preferably, but not necessarily, in parallel with the central axis A-A of the elongated threaded member 1.

The depth of said at least one longitudinal groove 6 can be between 2 and 6 mm, such as between 3 and 5 mm, for example about 4 mm. The depth of said at least one longitudinal groove 6 can here mean the depth of said at least one longitudinal groove 6 as measured from the minor diameter of the external wood thread 5.

The width of said at least one longitudinal groove 6 can be between 1 and 3 mm, for example about 2 mm. The width of said at least one longitudinal groove 6 can here mean the width of said at least one longitudinal groove 6 at the minor diameter of the external wood thread 5.

Said at least one longitudinal groove 6 extends preferably, but not necessarily, 1 to 2 mm into the shank 2 of the elongated threaded member 1.

Said at least one longitudinal groove 6 can a variety of cross section forms. In figures 7 to 9 some possible cross section forms are illustrated.

In the elongated threaded member 1 illustrated in cross-section in figure 7, the longitudinal groove 6 has a bottom (not marked with a reference numeral) and sides (not marked with a reference numeral) extending transversely in relation to the bottom.

In the elongated threaded member 1 illustrated in cross-section in figure 8, the longitudinal groove 6 has a V-shaped form with sides (not marked with a reference numeral). The angle between sides can be between 60 and 120 degrees. One advantage with a such cross-section form is that as the corners between the longitudinal groove 6 and the external wood thread 5 at the major diameter of the external wood thread 5 be less sharp than in figure 7, less damage will result on a surrounding inner surface of a hole into which the elongated threaded member 1 is screwed.

In the elongated threaded member 1 illustrated in cross-section in figure 9, the longitudinal groove 6 has a bottom (not marked with a reference numeral) and a lower section (not marked with a reference numeral) laterally limited by sides (not marked with a reference numeral) extending transversely in relation to the bottom and an upper section (not marked with a reference numeral) laterally limited by sides (not marked with a reference numeral) extending in an angle with respect to the bottom. The angle between sides in the upper section can be between 60 and 120 degrees. One advantage with a such cross-section form is that as the corners between the longitudinal groove 6 and the external wood thread 5 at the major diameter of the external wood thread 5 be less sharp than in figure 7, less damage will result on a surrounding inner surface of a hole into which the elongated threaded member 1 is screwed. Another advantage with such cross-section form compared to that illustrated in figure 8 is more space for glue because of the form of the lower section.

In the fastening arrangement, the elongated threaded member 1 can, as illustrated in figures 1 to 3, have an end section 7 with machine thread 8 extending helically along the shank 2 from the first free end 3. In such case, said at least one longitudinal groove 6 can, as illustrated in figures 1 to 3, extend to the machine thread 8 or to the vicinity of the machine thread 8 in the elongated threaded member 1. If the elongated threaded member 1 has an end section 7 with machine thread 8 extending helically along the shank 2 from the first free end 3, the elongated threaded member 1 can have an unthreaded section 9 between the machine thread 8 and the external wood thread 5, as illustrated in figures 1 to 3, wherein the elongated threaded member 1 is in the fastening arrangement arranged so that the unthreaded section 9 of the elongated threaded member 1 is in the hole 15 in the construction component 13 of metal. If the elongated threaded member 1 has an end section 7 with machine thread 8 extending helically along the shank 2 from the first free end 3, a nut 12 can be provided on the elongated threaded member 1 as illustrated in figure 2, wherein the nut 12 being configured to presses the construction component 13 of metal against the construction part 14 of wood. In such case, a washer 18 can be provided between the nut 12 and the construction component 13 of metal so that the nut 12 being configured to presses the construction component 13 of metal against the construction part 14 of wood through the washer 18.

In the fastening arrangement, the elongated threaded member 1 can, as illustrated in figure 4 have a hexagon head 10 at the first free end 3, wherein the hexagon head 10 of the elongated threaded member 1 configured to presses the construction component 13 of metal against the construction part 14 of wood. In such case, said at least one longitudinal groove 6 extend preferably, but not necessarily, to the hexagon head 10 or to the vicinity of the hexagon head 10 in the elongated threaded member 1 as illustrated in figure 4. If the elongated threaded member 1 in the fastening arrangement has a hexagon head 10 at the first free end 3, the elongated threaded member 1 can have an unthreaded section 9 between the hexagon head 10 and the external wood thread 5, as illustrated in figure 4, wherein the elongated threaded member 1 is preferably, but not necessarily, arranged so that the unthreaded section 9 of the elongated threaded member 1 is in the hole 15 in the construction component 13 of metal. If the elongated threaded member 1 has a hexagon head 10 at the first free end 3, a washer 18 can be provided between the nut 12 and the construction component 13 of metal so that the hexagon head 10 being configured to presses the construction component 13 of metal against the construction part 14 of wood through the washer 18.

In the fastening arrangement, the external wood thread 5 of the elongated threaded member 1 can, as illustrated in figure 5, extend to the first free end 3 or, as illustrated in figure 6, extend to the vicinity of the first free end 3. In such case, the elongated threaded member 1 can, as illustrated in figure 6, have a projecting hexagon end 11 at the first free end 3. In such case, the elongated threaded member 1 can also having an internal recess such as an internal hexagonal recess (not illustrated), a Torx recess (not illustrated) or Phillips recess (not illustrated) at the first free end 3.

In the fastening arrangement, the number of longitudinal grooves 6 in the elongated threaded member 1 can be 1, 2, 3 or 4. The longitudinal grooves 6 in the elongated threaded member 1 are preferably, but not necessarily, symmetrically provided.

In the fastening arrangement, said at least one longitudinal groove 6 in the elongated threaded member 1 extend preferably, but not necessarily, over the full length of the external wood thread 5.

In the fastening arrangement, the elongated threaded member 1 is preferably, but not necessarily, arranged so that said at least one longitudinal groove 6 extend out of the blind hole 16 in the construction part 14 of wood so as to provide a passage for excess glue 17 out of the blind hole 16.

It is apparent to a person skilled in the art that as technology advanced, the basic idea of the invention can be implemented in various ways. The invention and its embodiments are therefore not restricted to the above examples, but they may vary within the scope of the claims.

## Claims

1. An elongated threaded member (1) having a central axis A-A, a shank (2), a first free end (3), a second free end (4), and an external wood thread (5) protruding from the shank (2) and extending from the second free end (4) of the elongated threaded member (1) helically along at least a part of the shank (2),
**characterized**
**by** the elongated threaded member (1) having at least one longitudinal groove (6) extending in a longitudinal direction of the elongated threaded member (1), wherein said at least one longitudinal groove (6) having a depth that radially extends fully through the external wood thread (5) and into the shank (2) and having a length extending for more than 50 % of the length of the external wood thread (5).

2. The elongated threaded member (1) according to claim 1, **characterized**
**by** the elongated threaded member (1) having a hexagon head (10) at the first free end (3).

3. The elongated threaded member (1) according to claim 2, **characterized**
**by** said at least one longitudinal groove (6) extending to the hexagon head (10) or to the vicinity of the hexagon head (10) in the elongated threaded member (1).

4. The elongated threaded member (1) according to claim 2 or 3, **characterized**
**by** the elongated threaded member (1) having an unthreaded section (9) between the hexagon head (10) and the external wood thread (5).

5. The elongated threaded member (1) according to claim 1, **characterized**
**by** the elongated threaded member (1) having an end section (7) with machine thread (8) extending helically along the shank (2) from the first free end (3).

6. The elongated threaded member (1) according to claim 5, **characterized**
**by** said at least one longitudinal groove (6) extending to the machine thread (8) or to the vicinity of the machine thread (8) in the elongated threaded member (1).

7. The elongated threaded member (1) according to claim 5 or 6, **characterized**
**by** the elongated threaded member (1) having an unthreaded section (9) between the machine thread (8) and the external wood thread (5).

8. The elongated threaded member (1) according to claim 1, **characterized**
**by** the external wood thread (5) of the elongated threaded member (1) extending to the first free end (3) or to the vicinity of the first free end (3).

9. The elongated threaded member (1) according to any of the claims 5 to 8, **characterized**
**by** the elongated threaded member (1) having a projecting hexagon end (11) at the first free end (3).

10. The elongated threaded member (1) according to claim 5 to 8, **characterized**
**by** the elongated threaded member (1) having an internal recess for an external tool at the first free end (3).

11. The elongated threaded member (1) according to any of the claims 1 to 10, **characterized**
**by** the number of longitudinal grooves (6) in the elongated threaded member (1) being 1, 2, 3 or 4.

12. The elongated threaded member (1) according to any of the claims 1 to 11, **characterized**
**by** said at least one longitudinal groove (6) in the elongated threaded member (1) extending over the full length of the external wood thread (5).

13. A method for fastening a construction component (13) of metal to a construction part (14) of wood, wherein the method comprises
a first providing step for providing the construction component (13) of metal with a hole (15),
a drilling step for drilling a blind hole (16) in the construction part (14) of wood,
a second providing step for providing glue (17) in the blind hole (16),
an aligning step for aligning the hole (15) in the construction component (13) of metal and the blind hole (16) in the construction part (14) of wood,
a third providing step for providing an elongated threaded member (1) according to any of the claims 1 to 12, and
an arranging step for arranging the elongated threaded member (1) to pass through the hole (15) in the construction component (13) of metal and into the blind hole (16) in the construction part (14) of wood so the external wood thread (5) protruding from the shank (2) is at least partly in the blind hole (16) in the construction part (14) of wood, and so that the first free end (3) of the elongated threaded member (1) is outside the blind hole (16) in the construction part (14) of wood and outside the hole (15) in the construction component (13) of metal.

14. The method according to claim 13, **characterized**
**by** the elongated threaded member (1) that is provided in the third providing step being an elongated threaded member (1) according to any of the claims 2 to 4 or an elongated threaded member (1) according to claim 11 or 12 when dependent on any of the claims 2 to 4, and
by the hexagon head (10) of the elongated threaded member (1) is in the arranging step arranged to press the construction component (13) of metal against the construction part (14) of wood.

15. The method according to claim 13, **characterized**
**by** the elongated threaded member (1) that is provided in the third providing step being an elongated threaded member (1) according to any of the claims 5 to 7 or an elongated threaded member (1) according to claim 11 or 12 when dependent on any of the claims 5 to 7, and
by a fourth providing step for providing step for providing a nut (12) on the elongated threaded member (1) so that the nut (12) presses the construction component (13) of metal against the construction part (14) of wood.

16. The method according to any of the claims 13 to 15, **characterized**
**by** the elongated threaded member (1) being arranged in the arranging step so that said at least one longitudinal groove (6) extend out of the blind hole (16) in the construction part (14) of wood.

17. A fastening arrangement for fastening a construction component (13) of metal to a construction part (14) of wood, wherein in the fastening arrangement
the construction component (13) of metal is provided with a hole (15),
a blind hole (16) is drilled in the construction part (14) of wood,
glue (17) is provided in the blind hole (16),
the hole (15) in the construction component (13) of metal and the blind hole (16) in the construction part (14) of wood are aligned, and
wherein an elongated threaded member (1) according to any of the claims 1 to 12 is arranged to pass through the hole (15) in the construction component (13) of metal and into the blind hole (16) in the construction part (14) of wood so the external wood thread (5) protruding from the shank (2) is at least partly in the blind hole (16) in the construction part (14) of wood, and so that the first free end (3) of the elongated threaded member (1) is outside the blind hole (16) in the construction part (14) of wood and outside the hole (15) in the construction component (13) of metal.

18. The fastening arrangement according to claim 17, **characterized**
**by** the elongated threaded member (1) being an elongated threaded member (1) according to any of the claims 2 to 4 or an elongated threaded member (1) according to claim 11 or 12 when dependent on any of the claims 2 to 4, and
by the hexagon head (10) of the elongated threaded member (1) being configured to press the construction component (13) of metal against the construction part (14) of wood.

19. The fastening arrangement according to claim 17, **characterized**
**by** the elongated threaded member (1) being an elongated threaded member (1) according to any of the claims 5 to 7 or an elongated threaded member (1) according to claim 11 or 12 when dependent on any of the claims 5 to 7, and
by a nut (12) on the machine thread (8) of the elongated threaded member (1) and the nut (12) being configured to presses the construction component (13) of metal against the construction part (14) of wood.

20. The fastening arrangement according to any of the claims 17 to 19, **characterized**
**by** the elongated threaded member (1) being arranged so that said at least one longitudinal groove (6) extend out of the blind hole (16) in the construction part (14) of wood.
